# EUROPEAN PATENT APPLICATION

(11) **EP 4 050 713 A1**
(43) Date of publication of application: **31.08.2022**
(21) Application number: 20878865.3
(22) Date of filing: 18.08.2020
(51) Int. Cl.: H01M 50/20

(54) **POWER SUPPLY DEVICE, ELECTRIC VEHICLE USING SAME, AND POWER STORAGE DEVICE**

(30) Priority: 24.10.2019 JP 2019193550
(71) Applicant: SANYO Electric Co., Ltd., Kadoma-shi, Osaka 571-8501 (JP)
(72) Inventor: TAKAHASHI, Hiroyuki, Chuo-ku, Osaka-shi, Osaka 540-6207 (JP); YAMASHIRO, Go, Chuo-ku, Osaka-shi, Osaka 540-6207 (JP)
(74) Representative: Novagraaf International SA
(86) International application number: PCT/JP2020/031044
(87) International publication number: WO 2021/079595

(57) **Abstract**

To provide a power supply device including a battery stack in which battery cells are stacked, in order to prevent entering of water due to a capillary phenomenon and unintended conduction from occurring, the power supply device including, in a battery stack, a spacer interposed between adjacent battery cells, end plates (20) that press end surfaces of the battery stack, a plurality of fastening members each formed into a plate shape extending in a stacking direction of the plurality of battery cells, the fastening members being disposed on opposite side surfaces of the battery stack and fastening end plates (20) to each other, an output terminal that connects the plurality of battery cells in series or in parallel and outputs electric power, and a lower plate that is made of metal and covers a lower surface of the battery stack, wherein the output terminal is disposed near an upper surface side of the battery stack, and one or more wide regions expanded to be intervals at which a capillary phenomenon does not occur are formed in a path of a gap from the lower plate or the plurality of fastening members to the output terminal.

## Description

### TECHNICAL FIELD

The present invention relates to a power supply device and an electric vehicle and power storage device including the power supply device.

### BACKGROUND ART

A power supply device is used as a power supply device for driving an electric vehicle, a power supply device for power storage, or the like. In such a power supply device, a plurality of chargeable and dischargeable battery cells are stacked, the plurality of battery cells are connected in series or in parallel, and electric power is extracted from a total output terminal.

Since the power supply device is used in various environments, water may enter the power supply device. Even when an outer covering case having a high sealability is used, water may accumulate in the outer covering case due to dew condensation water generated by a temperature difference. When water accumulates inside the power supply device, there is a possibility that a short circuit occurs between battery cells having a potential difference via water.

In such a power supply device, it is necessary to prevent unintended conduction due to dew condensation, water entered from the outside, or the like. In particular, in a power supply device constituting a battery stack in which a large number of battery cells are stacked, a structure for avoiding a liquid junction is required to enhance safety.

However, it is not easy to prevent occurrence of liquid junction due to a capillary phenomenon in which water enters even a slight gap. In addition, since it is also difficult to eliminate dew condensation, it has not been conventionally easy to avoid unintended conduction due to a capillary phenomenon.

### Citation List

### Patent Literature

PTL 1: WO 2013/179796

### SUMMARY OF THE INVENTION

### Technical problem

An object of the present invention is to provide a power supply device including a battery stack in which battery cells are stacked, in which entering of water due to a capillary phenomenon is prevented and unintended conduction is unlikely to occur, and an electric vehicle and power storage device including the power supply device.

### Solution to problem

A power supply device according to an aspect of the present invention is a power supply device including a plurality of battery cells each including an electrode terminal, a spacer interposed between adjacent battery cells of the plurality of battery cells in a battery stack in which the plurality of battery cells are stacked, end plates that press end surfaces of the battery stack, a plurality of fastening members each formed into a plate shape extending in a stacking direction of the plurality of battery cells, the fastening members being disposed on opposite side surfaces of the battery stack and fastening the end plates to each other, an output terminal that connects the plurality of battery cells in series or in parallel and outputs electric power, and a lower plate that is made of metal and covers a lower surface of the battery stack, wherein the output terminal is disposed near an upper surface side of the battery stack, and one or more wide regions expanded to be intervals at which a capillary phenomenon does not occur are formed in a path of a gap from the lower plate or the fastening members to the output terminal.

### Advantageous effect of invention

In the power supply device according to one aspect of the present invention, the wide space is provided in the path of the gap from the lower plate of low voltage to the output terminal of high voltage. Therefore, a capillary phenomenon is inhibited, the occurrence of a liquid junction is suppressed, and safety can be improved.

### BRIEF DESCRIPTION OF THE DRAWINGS

Fig. 1 is an exploded perspective view showing a power supply device according to a first exemplary embodiment.
Fig. 2 is an exploded perspective view of the power supply device in Fig. 1.
Fig. 3 is a vertical cross-sectional view taken along the line III-III of the power supply device in Fig. 1.
Fig. 4 is a vertical cross-sectional view taken along the line IV-IV of the power supply device in Fig. 1.
Fig. 5 is an enlarged exploded perspective view showing a state in which a lid is removed from the power supply device in Fig. 1.
Fig. 6 is a side view of a battery stack in Fig. 2.
Fig. 7 is an exploded perspective view of a spacer and a supporter.
Fig. 8 is a side view showing a battery stack according to a modified example.
Fig. 9 is an exploded perspective view of a battery stack.
Fig. 10 is an enlarged longitudinal sectional view of a main part of a power supply device.
Fig. 11 is an enlarged perspective view of a main part of a battery stack.
Fig. 12 is an enlarged longitudinal sectional view of a main part taken along line XII-XII of the power supply device in Fig. 5.
Fig. 13 is an enlarged transverse sectional view of a main part taken along line XIII-XIII of the power supply device in Fig. 5.
Fig. 14 is a block diagram showing an example in which a power supply device is mounted on a hybrid vehicle that travels with an engine and a motor.
Fig. 15 is a block diagram showing an example in which a power supply device is mounted on an electric automobile that travels only with a motor.
Fig. 16 is a block diagram showing an example of applying a power supply device for power storage.
Fig. 17 is a side view showing a power supply device according to comparative example.
Fig. 18 is a perspective view showing a transverse section of the power supply device in Fig. 17.
Fig. 19 is a schematic transverse sectional view of the power supply device in Fig. 17.
Fig. 20 is a schematic longitudinal sectional view of the power supply device in Fig. 17.

### DESCRIPTION OF EMBODIMENT

Exemplary embodiments of the present invention may be specified by the following configurations.

The power supply device according to one exemplary embodiment of the present invention further includes a terminal cover of insulation that at least partially covers the output terminal, wherein the output terminal is disposed on an upper surface of each of the end plates, and the wide region is located between the terminal cover and the upper surface of each of the end plates. With the above configuration, by the wide region, it is possible to suppress a situation in which a liquid junction occurs due to a capillary phenomenon in the vicinity of the interface between the end plate and the output terminal.

In a power supply device according to another exemplary embodiment of the present invention, in addition to any of the above configurations, the terminal cover includes sloped surfaces extending along the upper surface of each of the end plates to right and left with the output terminal as a center, the sloped surfaces each forming a downhill gradient toward an end part of each of the end plates on the upper surface of each of the end plates. With the above configuration, even when moisture such as dew condensation is generated on the upper surface of the terminal cover, the moisture can be guided so as to flow down in a direction away from the output terminal, and it is possible to avoid a situation in which a liquid junction forms with the output terminal.

In a power supply device according to another exemplary embodiment of the present invention, in addition to any of the above configurations, the output terminal includes a second bolt and a third bolt that fix the output terminal to the end plates.

The sloped surfaces respectively include a second recess and a third recess through which the second bolt and the third bolt are inserted, and the second recess and the third recess each include a cutout communicating with an end surface of the corresponding sloped surface. With the above configuration, even when moisture such as dew condensation is generated in the second recess and the third recess, it is possible to avoid a situation in which water accumulates by discharging the water from the second recess and the third recess through the cutout.

In a power supply device according to another exemplary embodiment of the present invention, in addition to any of the above configurations, an upper surface of the terminal cover is sloped in a direction from a surface that presses the battery stack toward a back surface of each of the end plates. With the above configuration, even when moisture such as dew condensation is generated on the upper surface of the terminal cover, the water can be guided so as to flow toward the outside of the power supply device, and it is possible to avoid a situation in which a liquid junction occurs inside.

In a power supply device according to another exemplary embodiment of the present invention, in addition to any of the above configurations, the output terminal includes a bolt made of metal screwed to the upper surface of the end plate.

In a power supply device according to another exemplary embodiment of the present invention, in addition to any of the above configurations, each of the end plates includes a slope with a downhill gradient on a tip side of the bolt at an interface with the output terminal. With the above configuration, even when moisture such as dew condensation is generated around the bolt of the output terminal, it is possible to avoid a liquid junction and enhance safety by moving the moisture away from the periphery of the output terminal such that the moisture flows down along the slope.

A power supply device according to another exemplary embodiment of the present invention further includes, in addition to any of the above configurations, an end surface spacer of insulation between the battery stack and each of the end plates.

In a power supply device according to another exemplary embodiment of the present invention, in addition to any of the above configurations, the wide region is located between the end surface spacer and the output terminal. With the above configuration, by the wide region, it is possible to suppress a situation in which a liquid junction occurs due to a capillary phenomenon in the vicinity of the interface between the end plate and the battery stack.

A power supply device according to another exemplary embodiment of the present invention further includes, in addition to any of the above configurations, an output bus bar that connects the electrode terminal of a battery cell disposed on an end surface of the battery stack among the plurality of battery cells and the output terminal.

In a power supply device according to another exemplary embodiment of the present invention, in addition to any of the above configurations, the output terminal is disposed on the upper surface of each of the end plates.

In a power supply device according to another exemplary embodiment of the present invention, in addition to any of the above configurations, the wide region is located between the output bus bar and the battery stack. With the above configuration, by the wide region, it is possible to suppress a situation in which a liquid junction occurs due to a capillary phenomenon in the vicinity of the interface between the end plate and the battery stack.

In a power supply device according to another exemplary embodiment of the present invention, in addition to any of the above configurations, the spacer includes a flat plate that is brought into contact with main surfaces of the adjacent battery cells of the plurality of the battery cells and lateral guides that are formed on both side surfaces of the flat plate and partially cover side surfaces of the adjacent battery cells of the plurality of battery cells in contact with the flat plate.

In a power supply device according to another exemplary embodiment of the present invention, in addition to any of the above configurations, a recess at which the corresponding side surface of the flat plate is recessed inward from the corresponding lateral guide is formed as the wide region in a region where an upper part of the lateral guide is formed in the side surface of the flat plate. With the above configuration, a situation where moisture such as dew condensation flows along the lateral guide and ascends from the bottom to the top due to a capillary phenomenon is inhibited by forming the recess at the upper part of the lateral guide, and it is possible to avoid a liquid junction.

In a power supply device according to another exemplary embodiment of the present invention, in addition to any of the above configurations, each of the plurality of fastening members includes a plurality of pressing pieces that are provided for respective battery cells and press upper surfaces of adjacent battery cells of the plurality of battery cells.

A power supply device according to another exemplary embodiment of the present invention further includes, in addition to any of the above configurations, a supporter that is disposed at an upper end of the spacer and supports the plurality of pressing pieces.

In a power supply device according to another exemplary embodiment of the present invention, in addition to any of the above configurations, the wide region is formed between the supporter and the spacer. With the above configuration, the supporter that receives the pressing pieces of the fastening member is formed as a separate member from the spacer, the wide region is provided between the supporter and the spacer, and therefore it is possible to avoid a situation in which moisture such as dew condensation flows along the spacer due to a capillary phenomenon and reaches the fastening member.

In a power supply device according to another exemplary embodiment of the present invention, in addition to any of the above configurations, the wide region is a space of more than or equal to 1.8 mm.

An electric vehicle according to another exemplary embodiment of the present invention includes any of the above power supply devices, a motor for traveling to which the power supply device supplies electric power, a vehicle body equipped with the power supply device and the motor, and a wheel driven by the motor to cause the vehicle body to travel.

Further, a power storage device according to another exemplary embodiment of the present invention includes any of the above power supply devices and a power supply controller that controls charging and discharging of the power supply device, wherein the power supply controller enables charging of the plurality of battery cells with electric power from outside, and controls charging to be performed on the plurality of battery cells.

Hereinafter, an exemplary embodiment of the present invention will be described with reference to the drawings. However, an exemplary embodiment described below is an example for embodying the technical idea of the present invention, and the present invention is not limited to the following. Further, in the present specification, members indicated in the claims are not limited to the members of the exemplary embodiment. In particular, the dimensions, materials, shapes, and the relative dispositions of the constituent members described in the exemplary embodiment are not intended to limit the scope of the present invention only thereto unless otherwise specified and are merely illustrative examples. The sizes and positional relationships of the members shown in the drawings may be exaggerated for clarity of description. Further, in the following description, the same names and reference numerals indicate the same or similar members, and detailed description will be appropriately omitted. Furthermore, each element constituting the present invention may be configured such that a plurality of elements are configured by the same member and one member also serves as a plurality of elements, or conversely, the function of one member can be shared and achieved by a plurality of members. In addition, the content described in some of examples and exemplary embodiments may be applicable to other examples and exemplary embodiments.

The power supply device according to an exemplary embodiment is used in various applications including a power source to be mounted on a hybrid vehicle, an electric automobile, or other electric vehicles to supply electric power to a drive motor, a power source that stores power generated by natural energy such as solar power generation and wind power generation, and a power source for storing midnight electric power. In particular, the power supply device can be used as a power source suitable for large power and large current applications. In the following example, an exemplary embodiment applied to a power supply device for driving an electric vehicle will be described.

### [First exemplary embodiment]

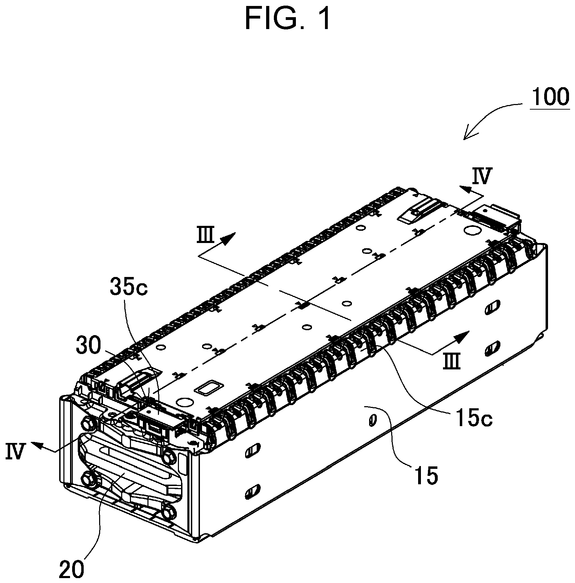

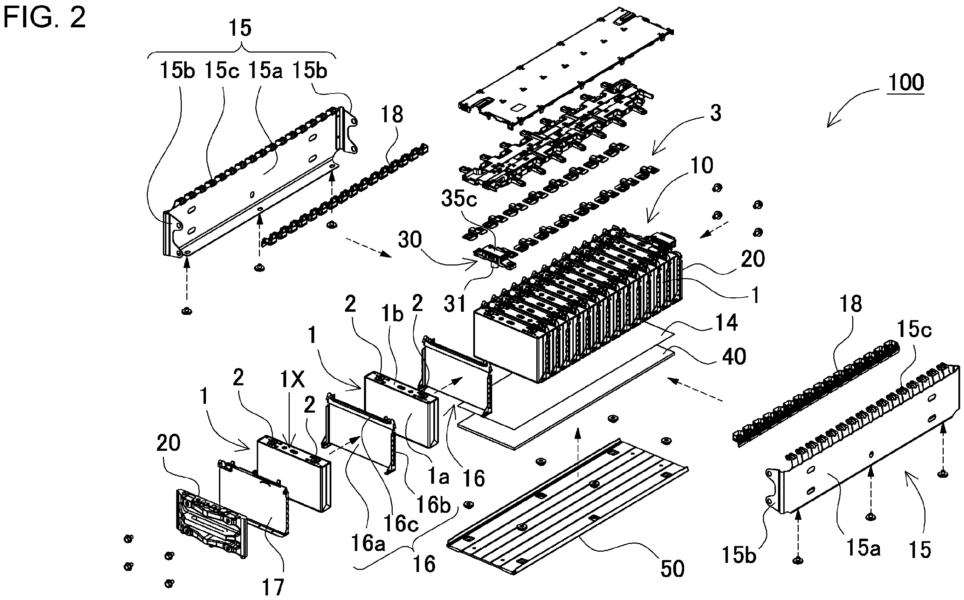

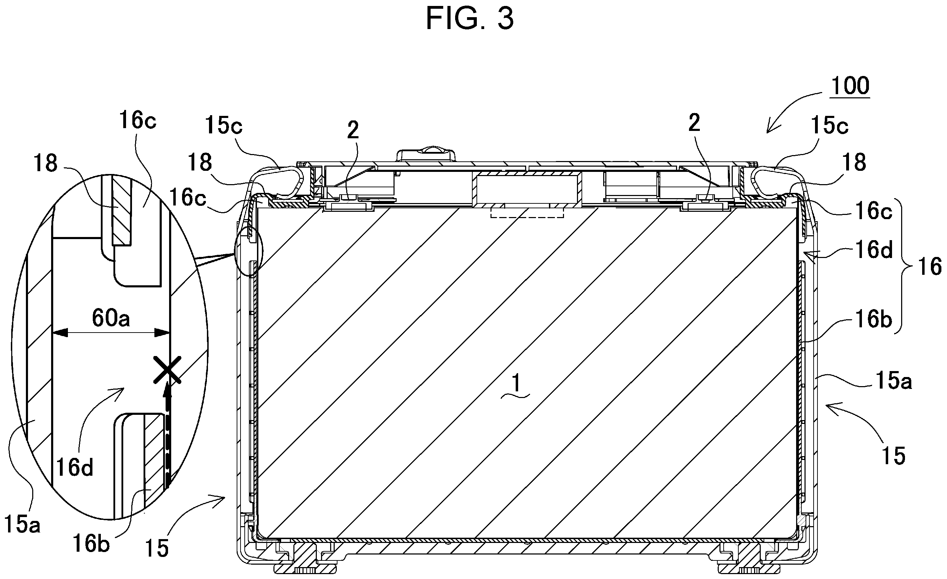

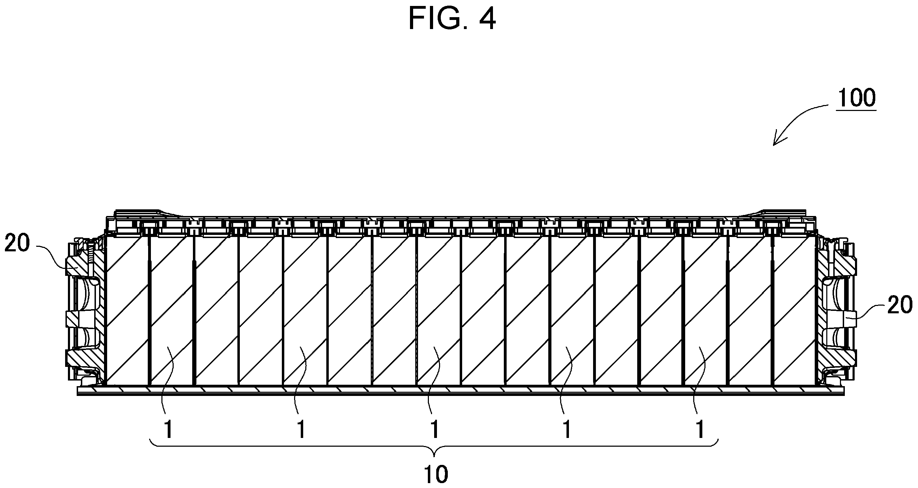

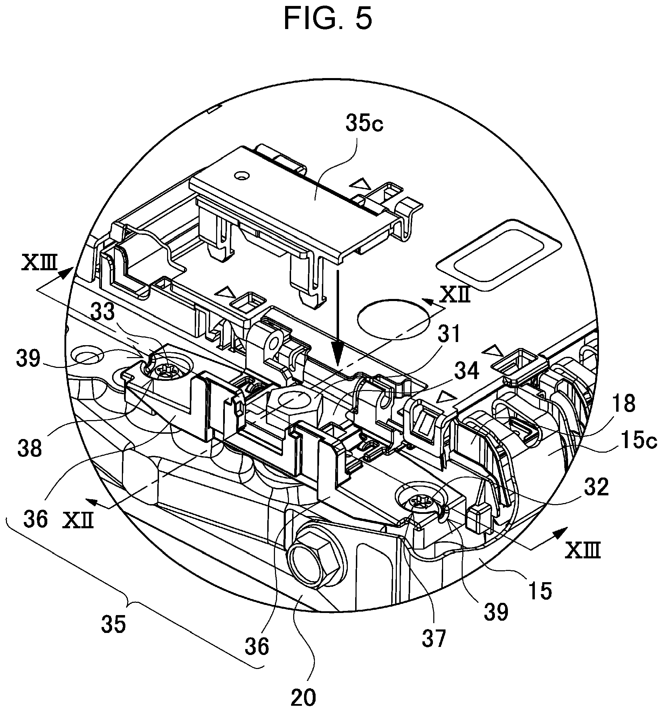

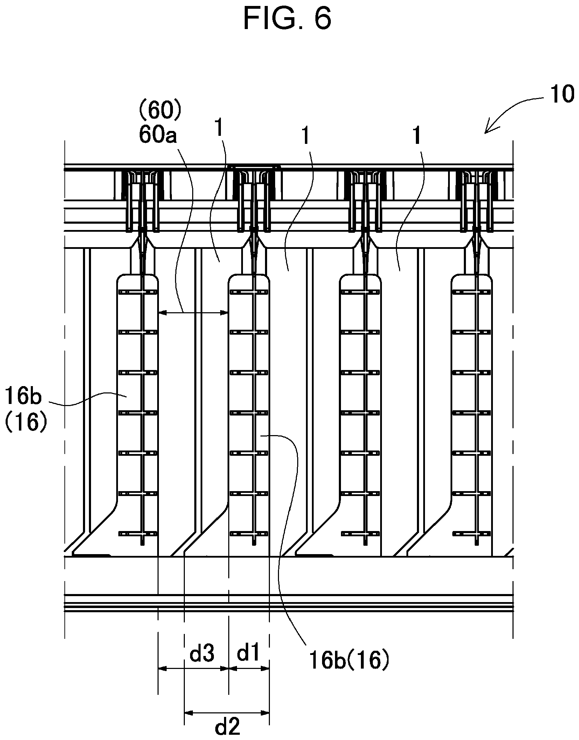

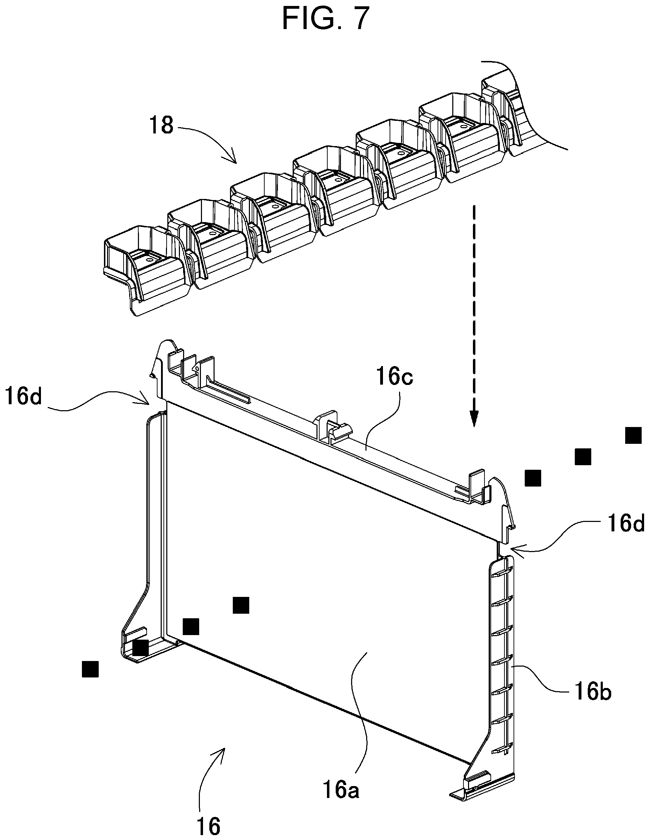

Power supply device 100 according to a first exemplary embodiment of the present invention is shown in Figs. 1 to 7. In these drawings, Fig. 1 is an exploded perspective view showing power supply device 100 according to the first exemplary embodiment, Fig. 2 is an exploded perspective view of power supply device 100 in Fig. 1, Fig. 3 is a vertical cross-sectional view taken along line III-III of power supply device 100 in Fig. 1, Fig. 4 is a vertical cross-sectional view taken along line IV-IV of power supply device 100 in Fig. 1, Fig. 5 is an enlarged exploded perspective view showing a state in which lid 35c is removed from power supply device 100 in Fig. 1, Fig. 6 is a side view of battery stack 10 in Fig. 2, and Fig. 7 is an exploded perspective view of spacer 16 and supporter 18.

### (Power supply device 100)

As shown in Figs. 1 to 6, power supply device 100 includes battery stack 10 in which a plurality of battery cells 1 are stacked, a pair of end plates 20 covering both end surfaces of battery stack 10, battery-side plate 14 disposed on a bottom surface of battery stack 10, a plurality of fastening members 15 fastening end plates 20 to each other, heat transfer sheet 40 disposed at a lower surface of battery stack 10, and lower plate 50 disposed at a lower surface of heat transfer sheet 40.

Battery cell 1 is a chargeable and dischargeable secondary battery. In power supply device 100 shown in Figs. 2 and 4, a plurality of battery cells 1 are stacked to form battery stack 10. A pair of end plates 20 is disposed on both end surfaces of battery stack 10. End parts of fastening members 15 are fixed to end plates 20 to fix stacked battery cells 1 in a pressurized state.

Fastening members 15 are each formed into a plate shape extending in a stacking direction of the plurality of battery cells 1. Fastening members 15 are disposed on opposite side surfaces of battery stack 10 and fasten end plates 20 to each other in a state where battery stack 10 is placed on an upper surface of lower plate 50.

Battery-side plate 14 is disposed near a bottom surface of battery stack 10 and is fixed to fastening members 15. Battery-side plate 14 is made of a metal plate or the like. Further, battery-side plate 14 and the bottom surface of battery stack 10 are insulated from each other via an insulating sheet or the like interposed therebetween.

Lower plate 50 causes battery stack 10 placed on the upper surface of lower plate 50 via heat transfer sheet 40 to release heat. Heat transfer sheet 40 is interposed between the upper surface of lower plate 50 and the lower surface of battery stack 10 to stabilize a thermally coupled state between lower plate 50 and battery stack 10. As a result, even when battery stack 10 generates heat due to charging or discharging of battery cells 1, the heat is transferred to lower plate 50 via heat transfer sheet 40 and is released.

### (Heat transfer sheet 40)

Heat transfer sheet 40 is made of a material having excellent heat transfer property with insulating properties. Heat transfer sheet 40, which has elasticity or flexibility, is pressed to be deformed between lower plate 50 and battery stack 10 and has a close contact at the interfaces without a gap thereby forming a thermally coupled state. As such heat transfer sheet 40, a silicone resin or the like can be preferably used. Further, a filler such as aluminum oxide may be added to increase heat transfer property.

### (Battery stack 10)

As shown in Figs. 1 to 4, battery stack 10 includes a plurality of battery cells 1 each including positive and negative electrode terminals 2, and bus bars 3 connected to electrode terminals 2 of the plurality of battery cells 1 to connect the plurality of battery cells 1 in parallel and in series. The plurality of battery cells 1 are connected in parallel or in series through bus bars 3.

Bus bar 3 is manufactured by cutting and processing a metal plate into a predetermined shape. For the metal plate forming bus bar 3, metal having a low electrical resistance and being lightweight can be used, such as aluminum plate or copper plate, or an alloy thereof. However, for the metal plate of bus bar 3, other metals or their alloys having a low electrical resistance and being lightweight can also be used.

Further, a bus bar holder may be disposed between battery stack 10 and bus bars 3. Use of the bus bar holder makes it possible to dispose the plurality of bus bars at fixed positions on the upper surface of the battery stack while insulating the plurality of bus bars from each other and insulating the terminal surfaces of the battery cells from the bus bars.

### (Battery cell 1)

Battery cell 1 is a prismatic battery having a constant cell thickness with an outer shape of a main surface, which is a wide surface, being quadrangular, and the thickness is smaller than the width. Battery cell 1 is a secondary battery which can be charged and discharged, and it is a lithium ion secondary battery. In the present invention, however, the battery cell is neither limited to a prismatic battery nor to a lithium ion secondary battery. As the battery cell, all chargeable batteries such as non-aqueous electrolyte secondary batteries other than lithium ion secondary batteries and nickel metal hydride battery cells can also be used.

In battery cell 1, an electrode body in which positive and negative electrode plates are stacked is housed in outer covering can 1a, and the outer covering can is filled with an electrolyte and hermetically sealed. Exterior can 1a is formed into a quadrangular cylindrical shape whose bottom is closed and has an upper opening that is hermetically closed by sealing plate 1b of a metal plate. Exterior can 1a is formed by deep-drawing a metal plate of aluminum, aluminum alloy, or the like. Sealing plate 1b is made of a metal plate of aluminum, aluminum alloy, or the like in the same manner as in outer covering can 1a. Sealing plate 1b is inserted into the opening of outer covering can 1a, and a boundary between an outer periphery of sealing plate 1b and an inner periphery of outer covering can 1a is irradiated with laser light, whereby sealing plate 1b is laser-welded to outer covering can 1a to be hermetically fixed.

### (Electrode terminal 2)

In battery cell 1, as shown in Fig. 2 and the like, sealing plate 1b being a top surface serves as terminal surface IX, and positive and negative electrode terminals 2 are fixed to both end parts of terminal surface IX. Electrode terminal 2 has a protrusion having a circular columnar shape. However, the protrusion is not necessarily in a circular columnar shape and may be in a polygonal columnar shape or an elliptic columnar shape.

Positive and negative electrode terminals 2 fixed to sealing plate 1b of the battery cell 1 are positioned where the positive electrode and the negative electrode are bilaterally symmetrical. This enables adjacent battery cells 1 to be connected in series by stacking battery cells 1 in an alternately and horizontally reversed manner and connecting electrode terminals 2 of the positive electrode and the negative electrode that are adjacent and close to each other by bus bars 3, as shown in Fig. 2 and the like. Note that the present invention does not specify the number and connection state of the battery cells constituting the battery stack. The number and connection state of the battery cells constituting the battery stack may be modified in various manners, inclusive of other exemplary embodiments described later.

The plurality of battery cells 1 are stacked to allow the thickness direction of each battery cell 1 to be aligned with the stacking direction to constitute battery stack 10. In the battery stack 10, the plurality of battery cells 1 are stacked such that terminal surfaces 1X provided with positive and negative electrode terminals 2, which are sealing plates 1b in Figs. 2 and 4, form the same plane.

### (Spacer 16)

In battery stack 10, spacer 16 may be interposed between battery cells 1 stacked adjacently to each other. Spacer 16 is made of an insulating material such as resin in the form of a thin plate or sheet. Spacer 16 is formed to have a plate shape that is substantially equal in size to an opposite surface of battery cell 1. Adjacent battery cells 1 can be insulated from each other by spacer 16 stacked between battery cells 1 adjacent to each other. In addition, a spacer having a shape in which a flow path of a cooling gas is formed between the battery cell and the spacer can also be used. Alternatively, the surface of the battery cell can be coated with an insulating material. For example, the surface of the outer covering can except for the electrode parts of the battery cell may be covered with a shrink film such as a polyethylene terephthalate (PET) resin. In this case, the spacer may be omitted.

Spacer 16 shown in Fig. 7 includes a flat plate 16a, a lateral guide 16b, and an upper guide 16c. Flat plate 16a is a plate-like member that is brought into contact with the main surface of battery cell 1. Flat plate 16a is in the form of a plate having substantially the same size as the opposite surface of battery cell 1, and spacer 16 is stacked between battery cells 1 adjacent to each other to insulate the adjacent battery cells 1 from each other. Substantially similarly to the opposite surface of battery cell 1, flat plate 16a has a rectangular shape having long sides that are long in the width and short sides.

Lateral guide 16b is formed on both side surfaces of flat plate 16a. Lateral guide 16b partially covers corners of a side surface of battery cell 1 in contact with flat plate 16a. One end part on the lower side of lateral guide 16b slightly protrudes toward one of battery cells 1 adjacent to each other and is partially bent along the bottom side of flat plate 16a. With such a shape, spacer 16 can easily stand by itself, and the lower corners of adjacent battery cells 1 can be held by the protruding part and the bent part, and therefore the adjacent battery cells 1 can be more reliably narrowly held.

Upper guide 16c is formed on an upper end edge of flat plate 16a, and partially covers a corner of sealing plate 1b of battery cell 1 in contact with flat plate 16a.

In spacer 16, as wide region 60, recess 16d at which both side surfaces of flat plate 16a are recessed inward from lateral guide 16b is formed in a region where an upper part of lateral guide 16b is formed in the side surface of flat plate 16a. In the example of Fig. 7, while a plurality of spacers 16 for insulating battery cells 1 from each other are prepared, supporter 18 is integrally molded in a state of being connected in advance.

### (End surface spacer 17)

In power supply device 100 shown in Fig. 2, end plates 20 are disposed on both end surfaces of battery stack 10. Further, end surface spacers 17 are interposed between end plates 20 and battery stack 10 to insulate end plates 20 and battery stack 10. End surface spacer 17 can also be formed in the form of a thin plate or sheet with an insulating material such as resin.

### (End plate 20)

As shown in Fig. 2 and the like, end plates 20 are disposed at both ends of battery stack 10 and fastened with each other via a pair of right and left fastening members 15 that are disposed along both side surfaces of battery stack 10. End plates 20 are both ends of battery stack 10 in the stacking direction of battery cells 1 and are disposed outside end surface spacers 17 to sandwich battery stack 10 from both ends.

### (Fastening member 15)

Fastening members 15 fix end plates 20 to each other in a fastened state at both ends in the longitudinal direction of battery stack 10. Fastening member 15 includes fastening plate 15a that covers a side surface of battery stack 10, fixing parts 15b that fix end plates 20 at both ends of fastening plate 15a, and a plurality of pressing pieces 15c protruding from an upper edge of fastening plate 15a. In the example of Fig. 2, both ends of fastening plate 15a are bent in an L shape, and the fixing part 15b is fixed to the main surface side of end plate 20 with a bolt or the like. However, the fixing part may have a configuration in which the end edge of the fastening plate is made linear and fixed to the side surface of the end plate with a bolt or the like. In this case, the end edge of the fastening part may be thickened by fixing a plate member to the end edge of the fastening part to form a stepped shape, and the step may be locked to the end plate. Further, a step corresponding to the step of the fixing part may also be formed on the side surface side of the end plate to be locked such that the steps are engaged with each other.

Each of the plurality of pressing pieces 15c abuts on and presses the upper surface of each battery cell 1 of battery stack 10. As a result, each battery cell 1 is pressed by pressing piece 15c from above and below and held in the height, and even when vibration, impact, or the like is applied to battery stack 10, each battery cell 1 can be maintained so as not to be displaced in the vertical direction.

As fastening member 15, a metal plate such as iron, preferably a steel plate, iron, an iron alloy, SUS, aluminum, an aluminum alloy, or the like can be used. It is preferable that fastening plate 15a, fixing part 15b, and pressing piece 15c be integrally formed of a metal plate. Further, fastening member 15 may be formed of the same member, and the thicknesses of fixing part 15b and pressing piece 15c may be made different.

### (Output terminal 30)

In battery stack 10, a total output obtained by connecting the plurality of battery cells 1 in series and/or in parallel is connected to output terminal 30. Output terminal 30 is a total terminal that outputs electric power from power supply device 100. Output terminal 30 is disposed near the upper surface of battery stack 10. Lower plate 50 is disposed on the lower side of battery stack 10. Lower plate 50 is made of metal and used as a ground line or an earth line, and thus a potential difference is generated between the lower plate and output terminal 30. Similarly, fastening member 15 is also made of metal, and a potential difference is generated between the fastening member and output terminal 30.

In such a power supply device, when parts having a potential difference are unintentionally electrically connected to each other due to dew condensation, water entered from the outside, or the like, a short circuit due to water, that is, a liquid junction occurs. In general, since the power supply device is used in various environments, the periphery of the power supply device may be exposed to water, and water may enter the power supply device. Even when the periphery is surrounded by a case having a high sealability, water may accumulate in the sealed case due to dew condensation water generated by a temperature difference. When water accumulates inside the power supply device, there is a possibility that a short circuit occurs between parts having a potential difference via water. Specifically, water may enter a slight gap between the members due to a capillary phenomenon and be sucked up. In particular, when the total output terminal serving as an output of the power supply device is electrically connected to a low-voltage part such as the lower plate or the fastening member by water, a liquid junction occurs. It is difficult to completely eliminate such a gap between members, and it has not been conventionally easy to avoid a liquid junction because water crawls up even with a slight gap.

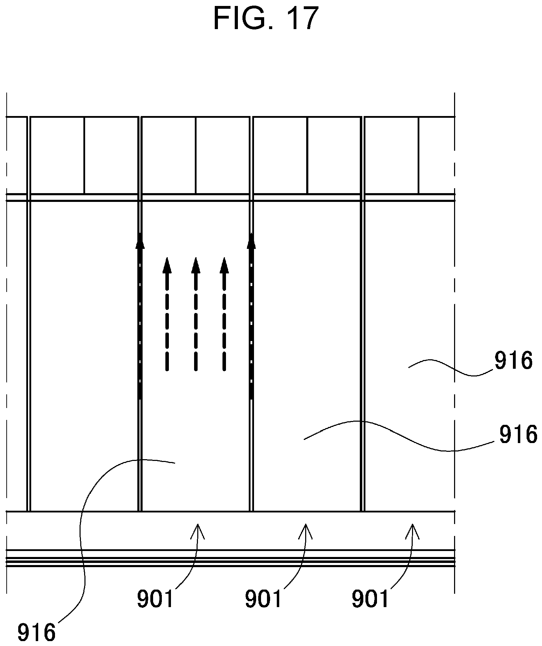

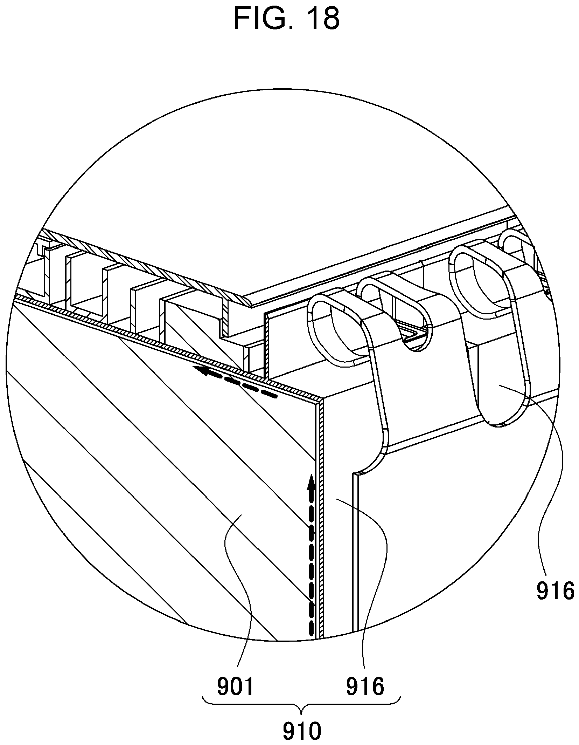

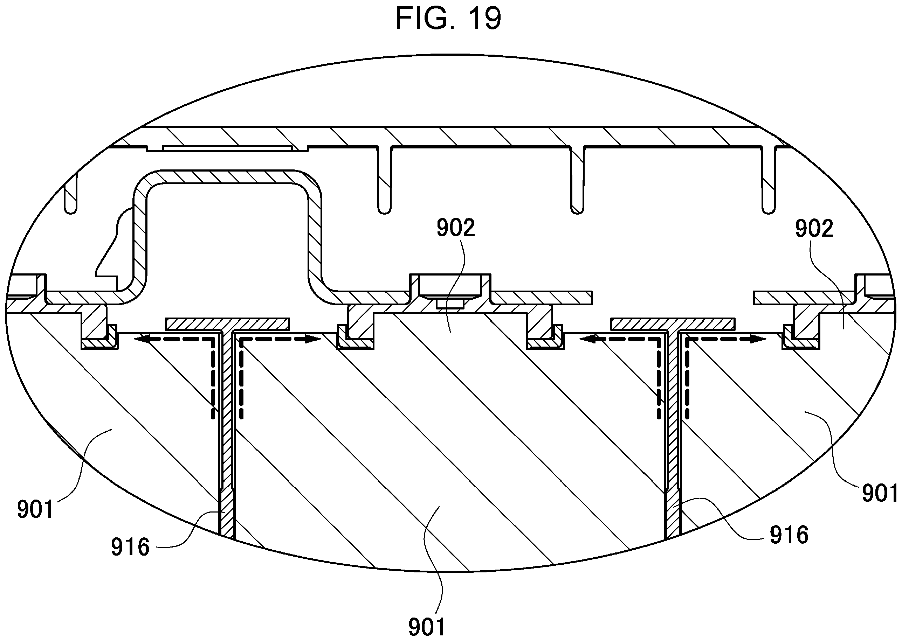

For example, as shown in the side view of Fig. 17 and the transverse sectional perspective view of Fig. 18, in a configuration in which a large number of battery cells 901 are stacked with spacers 16 interposed therebetween, it is inevitable that a slight gap is present between the spacers 16 at the side surface of the battery stack 10. When water accumulates in lower plate 50 in such a state, as shown in the side view of Fig. 17 and the schematic transverse sectional view of Fig. 19, it is considered that water travels along the gap between spacers 16, crawls up to the upper surface using the side surface of battery stack 10, and reaches output terminal 30. As a result, lower plate 50 and output terminal 30 are electrically connected to each other, and a liquid junction occurs. In particular, water has a property of entering even a fine gap due to a capillary phenomenon. It is not easy to completely eliminate the gap between the members due to a relationship such as manufacturing tolerance, and cost is also required to do so.

### (Wide region 60)

Therefore, in the present exemplary embodiment, one or more wide regions 60 expanded to be intervals at which a capillary phenomenon does not occur are formed in the path of the gap from lower plate 50 or fastening member 15 to output terminal 30. A capillary phenomenon occurs in a narrow gap but does not occur in a wide gap. Therefore, in the present exemplary embodiment, by intentionally providing a wide gap, the entry of water is inhibited, the occurrence of a liquid junction is suppressed, and safety is improved.

Wide region 60 is an interval at which a capillary phenomenon does not occur. The occurrence conditions of a capillary phenomenon vary depending on the material, but according to the test conducted by the inventors, it has been found that most of a capillary phenomenon can be prevented by providing a space of about more than or equal to 1.8 mm. More preferably, wide region 60 is a space of more than or equal to 2 mm.

As an example of wide region 60, the width of lateral guide 16b of spacer 16, that is, the length of lateral guide 16b in the stacking direction of battery cells 1 is partially different. In the example shown in the exploded perspective view of Fig. 7, the lateral guide 16b of the spacer 16 protrudes in one direction at a lower part and has a constant width in the other region. As a result, width d1 of the middle part becomes narrower than width d2 of the lower part in the lateral guide 16b, and therefore, when such spacers 16 are stacked, wide region 60a having width d3 (= d2 - d1) is formed between adjacent spacers 16 as shown in the side view of Fig. 6. When such wide region 60a is present between spacers 16, a capillary phenomenon does not develop. Therefore, even when water accumulates on lower plate 50, it is possible to avoid a situation in which water is sucked up to the upper side of spacer 16 along the gap between spacers 16 due to a capillary phenomenon.

### (Modified example)

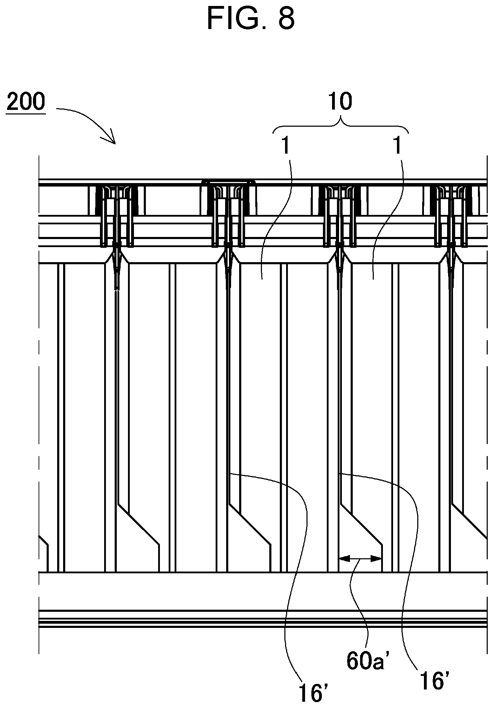

In the above example, the width of lateral guide 16b is widened in the lower part of spacer 16 and is narrowed in the other part. However, the present invention is not limited to such a configuration. For example, the width of lateral guide 16b of spacer 16 may be narrowed at the lower part and widened at the other part. Such an example is shown as power supply device 200 according to a modified example in a side view of Fig. 8. Even in such a configuration, by providing wide region 60a' having a wide width, the gap in which spacers 16' are stacked becomes wide to inhibit the occurrence of a capillary phenomenon, and it is possible to avoid the situation in which the water crawls up.

Further, in the above example, an example in which wide region 60 is provided on the lower side at the interface between spacers 16 has been described, but the present invention is not limited to this configuration, and for example, the wide region may be provided on the upper side or in the middle of the interface between the spacers. Furthermore, wide regions may be provided at a plurality of places.

In the above example, the configuration in which the occurrence of a capillary phenomenon in the gap between the spacers 16 in the stacking direction of the battery cells 1 is prevented by wide region 60 has been described. Similarly, wide region 60 that also inhibits a capillary phenomenon in the width direction intersecting the stacking direction of battery cells 1 will be described below. As shown in Fig. 18, on the side surface side of battery stack 910, a situation may occur in which water is sucked up due to a capillary phenomenon in a gap at the interface between the side surface of battery cell 901 and spacer 916. Therefore, in spacer 16 according to the present exemplary embodiment, as shown in Fig. 7, recesses 16d recessed inward are formed on the upper side surfaces of spacer 16. With such a configuration, as shown in the cross-sectional view of Fig. 3, a path in which moisture such as dew condensation travels between the side surface of battery cell 1 and lateral guide 16b due to a capillary phenomenon and ascends from the bottom to the top is interrupted by forming recess 16d on lateral guide 16b, and therefore it is possible to prevent the water from ascending above recess 16d and avoid a liquid junction.

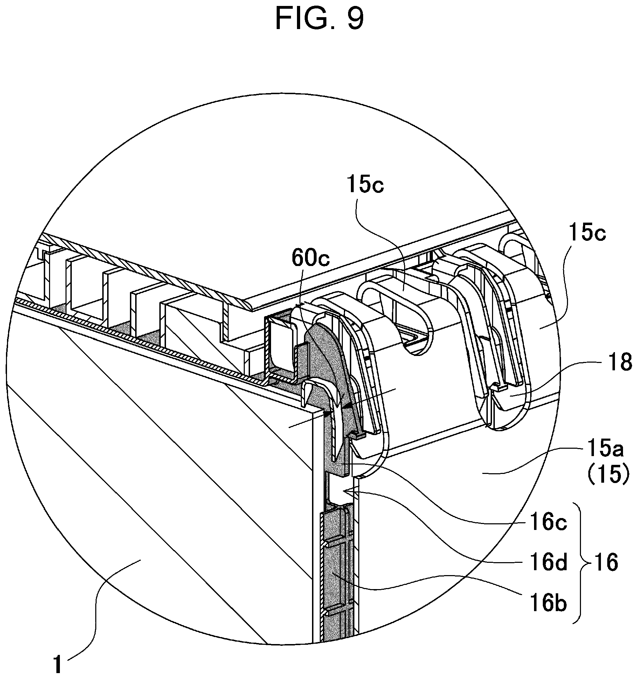

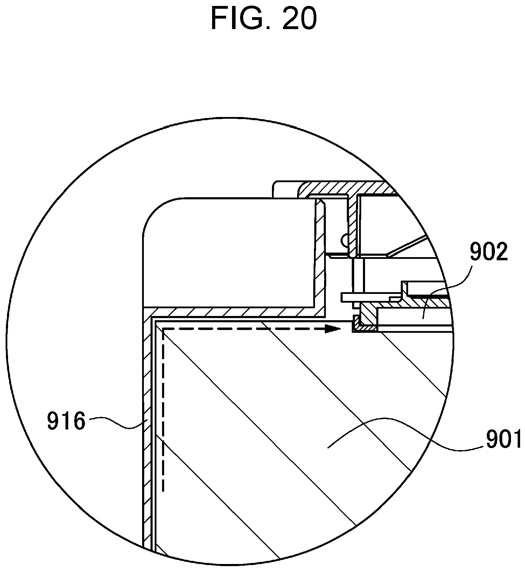

In addition, a configuration for interrupting water traveling through a gap between battery cells 1, that is, a slight gap between the main surface of battery cell 1 and spacer 16, will be described with reference to a comparative example shown in Figs. 18 to 20. Specifically, as shown in the traverse sectional perspective view of Fig. 18 and the schematic longitudinal sectional view of Fig. 20, it is considered that a capillary phenomenon occurs in a gap between the main surface of battery cell 901 and spacer 916, and water that has reached the upper surface of battery cell 901 forms a liquid junction with electrode terminal 902 and the output terminal as indicated by broken line arrows. In contrast, in power supply device 100 according to the present exemplary embodiment, spacer 16 and supporter 18 that receives pressing pieces 15c of fastening member 15, which were conventionally an integrated structure, are separated from each other to form separate members. That is, as shown in the exploded perspective view of Fig. 7, spacer 16 and supporter 18 are configured separately. As a result, as shown in Figs. 9 to 11, wide region 60 having a wide gap can be formed between the upper surface of battery cell 1 and supporter 18.

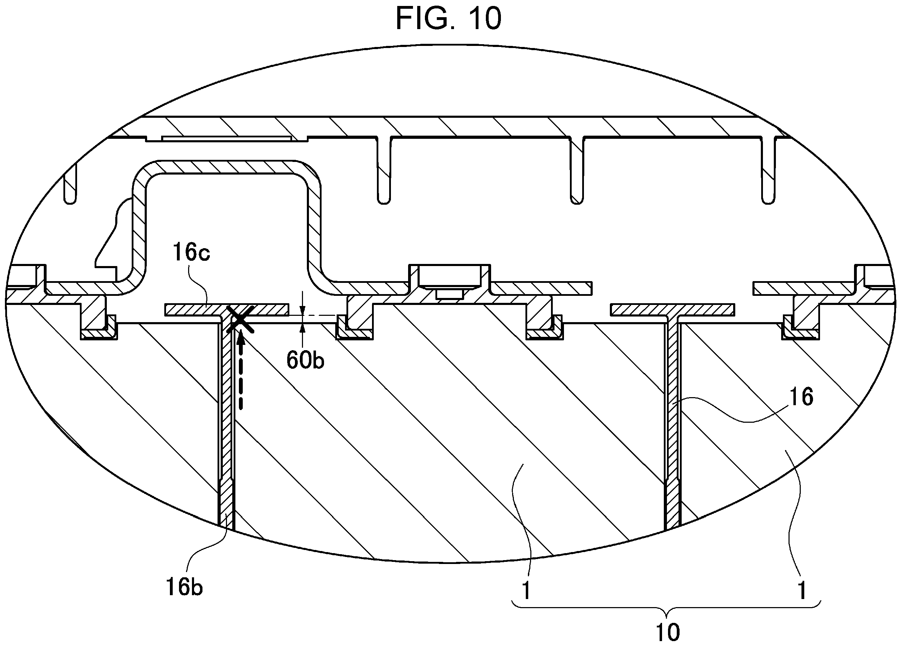

Specifically, as shown in the longitudinal sectional view of Fig. 10, in battery stack 10 in which spacers 16 and battery cells 1 are alternately stacked, wide region 60b is formed between upper guide 16c of each spacer 16 and the upper surface of battery cell 1. This inhibits a capillary phenomenon of water trying to turn to the left and proceed at an upper part of battery cell 1 in a path in which water crawls up due to a capillary phenomenon indicated by a broken line arrow in Fig. 10.

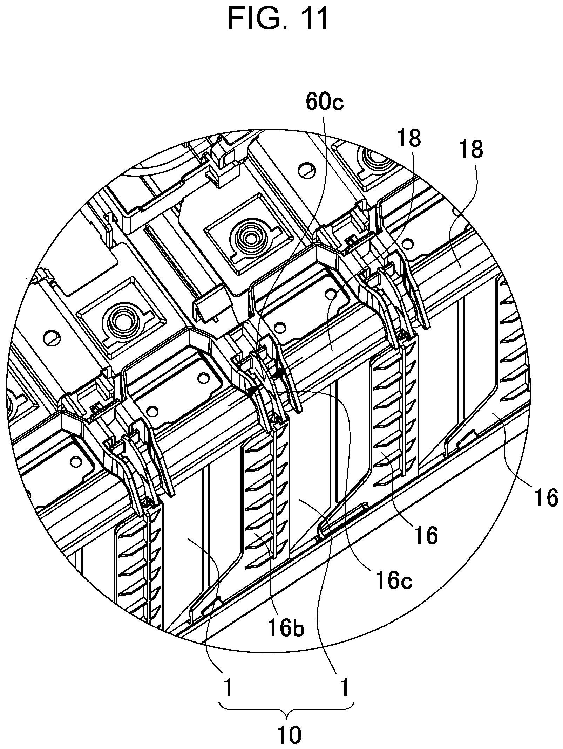

On the other hand, as shown in the perspective view of Fig. 11, a gap is formed between upper guide 16c, which is an upper part of spacer 16, and supporter 18 in a state in which supporter 18 as a separate member is combined with battery stack 10 in a state in which spacers 16 and battery cells 1 are alternately stacked. By setting this gap as wide region 60c that inhibits a capillary phenomenon, the path of a capillary phenomenon of water indicated by the broken line in the perspective view of Fig. 9 is inhibited. That is, as described above, fastening member 15 is provided with a plurality of pressing pieces 15c for pressing the upper surfaces of adjacent battery cells 1 on the upper surface of fastening plate 15a for respective battery cells 1 as shown in Fig. 2. On the other hand, supporter 18 that supports the plurality of pressing pieces 15c is provided above the spacer 16. By configuring spacer 16 and supporter 18 as separate members in this manner, it is possible to form wide region 60c between supporter 18 and spacer 16. As a result, it is possible to avoid a situation in which moisture such as dew condensation travels along spacer 16 and reaches fastening member 15 due to a capillary phenomenon.

In this way, wide region 60 expanded to be an interval at which a capillary phenomenon does not occur is formed between supporter 18 and the upper surface of battery cell 1, and even when water travels up to the upper surface of battery cell 1 by a capillary phenomenon, it is possible to inhibit water from proceeding between supporter 18 and the upper surface of battery cell 1 and to inhibit water from proceeding toward the electrode side.

### (Output terminal 30)

Output terminal 30 is disposed on the upper surface of end plate 20. Output terminal 30 includes output bus bar 34, terminal cover 35, lid 35c, bolt 31, second bolt 32, and third bolt 33. Output bus bar 34 is connected to electrode terminals 2 of battery cell 1 located at an end part of battery stack 10 and serves as a total output terminal of a battery group in which the plurality of battery cells 1 are connected in series or in parallel.

### (Terminal cover 35)

Terminal cover 35 is an insulating member that insulates output bus bar 34 from end plate 20 made of metal. Terminal cover 35 is made of resin. Preferably, output bus bar 34 is insert-molded in terminal cover 35. Terminal cover 35 to which output bus bar 34 is fixed has a through-hole as an opening, and bolt 31 made of metal is inserted into the through-hole and screwed into a screw hole provided in the upper surface of end plate 20. Further, terminal cover 35 extends along the upper surface of end plate 20, and right and left sides thereof are screwed and fixed to end plate 20 by second bolt 32 and third bolt 33. The upper surface of bolt 31 is covered with lid 35c.

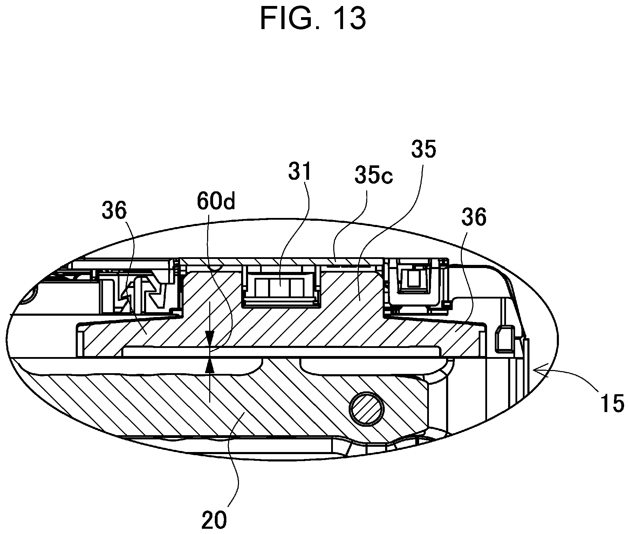

In the example shown in the perspective view of Fig. 5 and the transverse sectional view of Fig. 13, terminal cover 35 forms extending parts 36 on the right and left with output terminal 30 as the center. The upper surface of each extending part 36 is a sloped surface sloped with a downhill gradient toward the end part. As a result, even when moisture such as dew condensation is generated on the upper surface of terminal cover 35, it is possible to guide the moisture so as to flow down in a direction away from output terminal 30, and it is possible to avoid a situation where a liquid junction forms with output terminal 30.

In the extending parts 36, second recess 37 and third recess 38 through which second bolt 32 and third bolt 33 are inserted are formed in downhill parts of the sloped surfaces. Each of second recess 37 and third recess 38 forms cutout 39 communicating with an end surface of the extending part 36. With such a configuration, even when water flows down into second recess 37 and third recess 38 formed in the downhills of the sloped surfaces or water such as dew condensation accumulates there, the water is discharged from second recess 37 and third recess 38 through cutouts 39, whereby a situation in which water accumulates can be avoided.

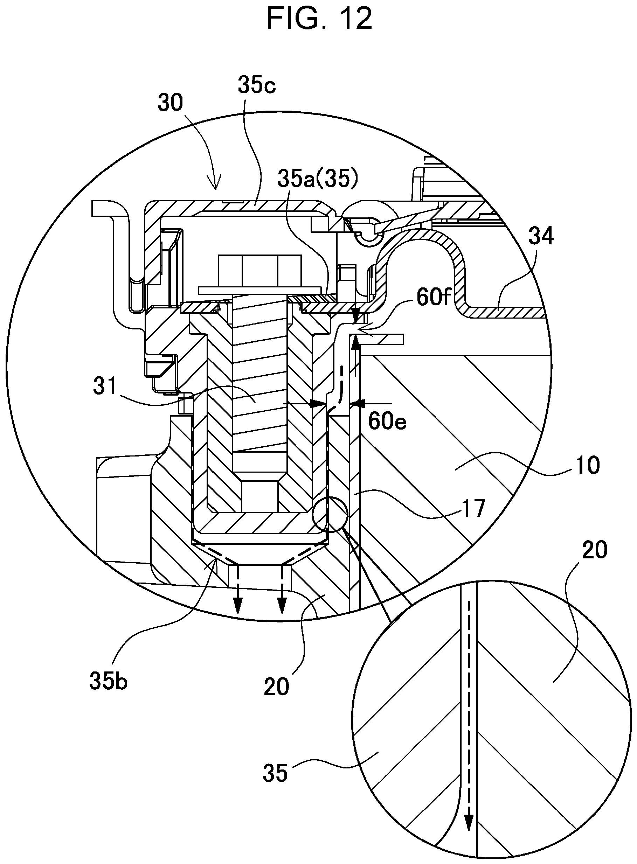

Further, as shown in the longitudinal sectional view of Fig. 12, upper surface 35a of terminal cover 35 has a slope such that end plate 20 has a downhill gradient toward the opposite to the surface that presses battery stack 10. As a result, even when water accumulates on the upper surface of terminal cover 35, the water is guided to flow down not toward battery stack 10 but toward the outside of power supply device 100, whereby a liquid junction can be prevented.

In addition, as shown in the transverse sectional view of Fig. 13, wide region 60d is provided between terminal cover 35 and the upper surface of end plate 20. This can prevent the occurrence of a liquid junction due to a capillary phenomenon in the vicinity of the interface between end plate 20 and output terminal 30 by wide region 60.

Further, as shown in the longitudinal sectional view of Fig. 12, end plate 20 has a slope with a downhill gradient at bottom 35b of the screw hole into which bolt 31 is screwed. As a result, even when moisture such as dew condensation is generated around bolt 31 of output terminal 30, it is possible to avoid a liquid junction and to enhance safety by moving the moisture away from the periphery of output terminal 30 such that the moisture flows down along the slope.

Furthermore, wide region 60 can also be provided between end surface spacer 17 and end plate 20. As shown in the longitudinal sectional view of Fig. 12, a situation in which water climbs up the gap between end surface spacer 17 and end plate 20 due to a capillary phenomenon is prevented by providing wide region 60e above the joint interface between end surface spacer 17 and end plate 20. Furthermore, wide region 60f is provided above the end surface spacer 17, between a part where battery stack 10 is partially covered by the upper end of end surface spacer 17 bending toward battery stack 10 and terminal cover 35 constituting output terminal 30, whereby a capillary phenomenon is prevented from occurring in this part.

Power supply device 100 described above can be used as a power source for a vehicle that supplies electric power to a motor that causes an electric vehicle to travel. As an electric vehicle equipped with power supply device 100, an electric vehicle such as a hybrid vehicle or a plug-in hybrid vehicle that travels with both an engine and a motor, or an electric automobile that travels only with a motor can be used, and the power supply device is used as a power source for these vehicles. An example will be described in which a large-capacity, high-output power supply device in which a large number of power supply devices 100 described above are connected in series or in parallel to obtain electric power for driving an electric vehicle and a necessary controlling circuit is further added is constructed.

### (Power supply device for hybrid vehicle)

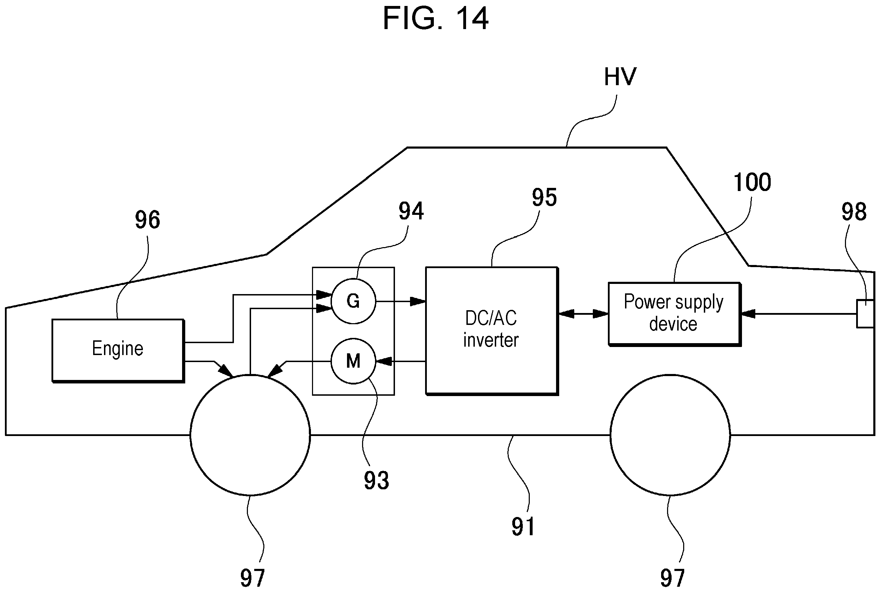

Fig. 14 shows an example in which power supply device 100 is mounted on a hybrid vehicle that travels with both an engine and a motor. Vehicle HV equipped with power supply device 100 shown in this drawing includes vehicle main body 91, engine 96 and motor 93 for traveling that cause vehicle main body 91 to travel, wheels 97 that are driven by engine 96 and motor 93 for traveling, power supply device 100 that supplies electric power to motor 93, and power generator 94 that charges the battery of power supply device 100. Power supply device 100 is connected to motor 93 and power generator 94 via DC/AC inverter 95. Vehicle HV travels using both motor 93 and engine 96 while charging and discharging the battery of power supply device 100. Motor 93 is driven in a region where an engine efficiency is low, for example, during acceleration or low-speed traveling, and causes the vehicle to travel. Motor 93 is driven by electric power supplied from power supply device 100. Power generator 94 is driven by engine 96 or driven by regenerative braking acquired when braking is applied to the vehicle and charges the battery of power supply device 100. As shown in Fig. 14, vehicle HV may include charging plug 98 for charging power supply device 100. Connecting charging plug 98 to an external power source enables charging of power supply device 100.

### (Power supply device for electric automobile)

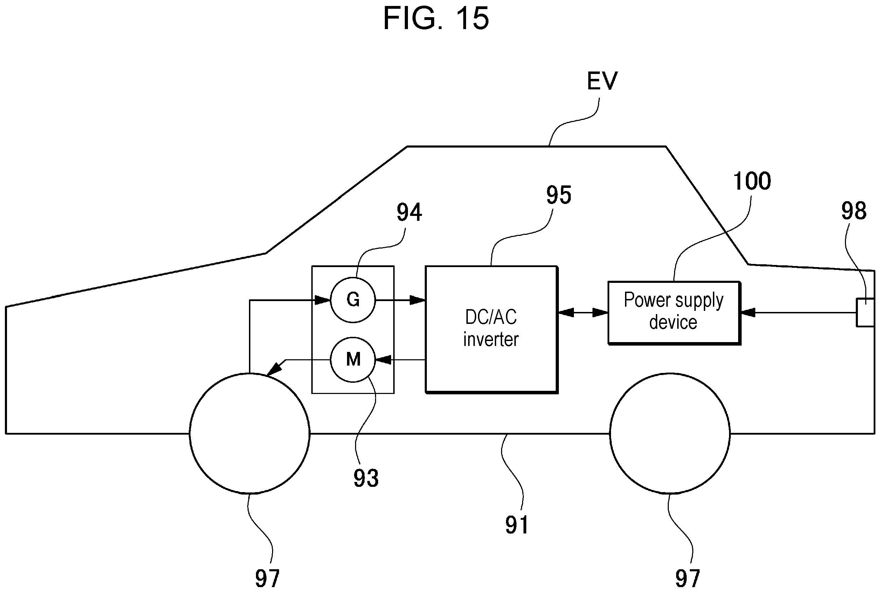

Fig. 15 shows an example in which power supply device 100 is mounted on an electric automobile that travels only with a motor. Vehicle EV equipped with power supply device 100 shown in this drawing includes vehicle main body 91, motor 93 for traveling that causes vehicle main body 91 to travel, wheels 97 that are driven by motor 93, power supply device 100 that supplies electric power to motor 93, and power generator 94 that charges the battery of power supply device 100. Power supply device 100 is connected to motor 93 and power generator 94 via DC/AC inverter 95. Motor 93 is driven by electric power supplied from power supply device 100. Power generator 94 is driven by the energy at the time of applying regenerative braking to vehicle EV and charges the battery of power supply device 100. Vehicle EV includes charging plug 98, and power supply device 100 can be charged by connecting charging plug 98 to an external power source.

### (Power supply device for power storage device)

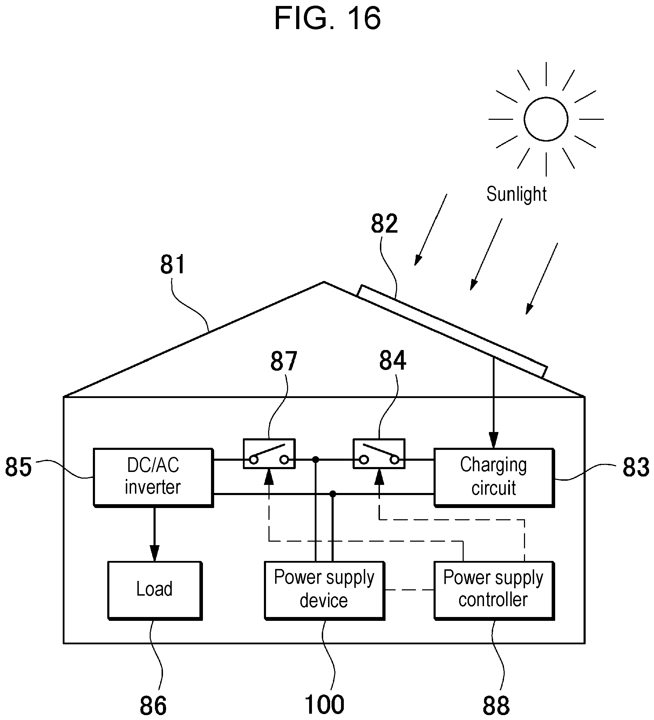

Further, the present invention does not limit the application of the power supply device to a power source for a motor that causes a vehicle to travel. The power supply device according to the exemplary embodiment can be used as a power source for a power storage device that performs power storage by charging a battery with electric power generated by solar power generation, wind power generation, or other methods. Fig. 16 shows a power storage device that performs power storage by charging the battery of power supply device 100 with solar battery 82.

The power storage device shown in Fig. 16 charges the battery of power supply device 100 with electric power generated by solar battery 82 that is disposed, for example, on a roof or a rooftop of building 81 such as a house or a factory. This power storage device charges the battery of power supply device 100 via charging circuit 83 using solar battery 82 as a charging power source, and then supplies electric power to load 86 via DC/AC inverter 85. Thus, this power storage device includes a charge mode and a discharge mode. In the power storage device shown in the drawing, DC/AC inverter 85 is connected to power supply device 100 via discharging switch 87 and charging circuit 83 is connected to power supply device 100 via charging switch 84. Discharging switch 87 and charging switch 84 are turned on and off by power supply controller 88 of the power storage device. In the charge mode, power supply controller 88 turns on charging switch 84 and turns off discharging switch 87 to allow charging from charging circuit 83 to power supply device 100. When charging is completed and the battery is fully charged or when the battery is in a state where a capacity of a predetermined value or more is charged, power supply controller 88 turns off charging switch 84 and turns on discharging switch 87 to switch the mode to the discharge mode and allows discharging from power supply device 100 to load 86. When necessary, power supply controller 88 can supply electric power to load 86 and charge power supply device 100 simultaneously by turning on charging switch 84 and turning on discharging switch 87.

Although not shown, the power supply device can also be used as a power source of a power storage device that performs power storage by charging a battery using midnight electric power at night. The power supply device that is charged with midnight electric power is charged with the midnight electric power that is surplus electric power generated by a power station, and outputs the electric power during the daytime when an electric power load increases, which can limit peak electric power during the daytime to a small value. The power supply device can also be used as a power source charged with both output of a solar battery and the midnight electric power. This power supply device can efficiently perform power storage using both electric power generated by the solar battery and the midnight electric power effectively in consideration of weather and electric power consumption.

The power storage system as described above can be suitably used in applications including a backup power supply device that can be mounted on a computer server rack, a backup power supply device for wireless base stations for cellular phones and the like, a power storage device combined with a solar battery such as a power storage power source for homes and factories or a power source for street lights, and a backup power supply for traffic lights and traffic indicators on roads.

### INDUSTRIAL APPLICABILITY

The power supply device according to the present invention can be suitably used as a power source for a large current used for a power source of a motor for driving an electric vehicle such as a hybrid vehicle, a fuel cell automobile, an electric automobile, or an electric motorcycle. Examples of the power supply device include a power supply device for a plug-in hybrid electric automobile and a hybrid electric automobile that can switch between an EV traveling mode and an HEV traveling mode, an electric automobile, or the like. The power supply device can also be appropriately used for the applications including a backup power supply device that can be mounted on a computer sever rack, a backup power supply device for wireless base stations of cellular phones and the like, a power storage device combined with a solar battery such as a power storage power source for homes and factories or a power source for street lights, and a backup power source for traffic lights.

### REFERENCE MARKS IN THE DRAWINGS

100, 200: power supply device
1, 901: battery cell
IX: terminal surface
1a: outer covering can
1b: sealing plate
2, 902: electrode terminal
3: bus bar
10, 910: battery stack
14: battery-side plate
15: fastening member
15a: fastening plate
15b: fixing part
15c: pressing piece
16, 16', 916: spacer
16a: flat plate
16b: lateral guide
16c: upper guide
16d: recess
17: end surface spacer
18: supporter
20: end plate
30: output terminal
31: bolt
32: second bolt
33: third bolt
34: output bus bar
35: terminal cover
35a: upper surface
35b: bottom
35c: lid
36: extending part
37: second recess
38: third recess
39: cutout
40: heat transfer sheet
50: lower plate
60, 60a, 60a', 60b, 60c, 60d, 60e, 60f: wide region
81: building
82: solar battery
83: charging circuit
84: charging switch
85: DC/AC inverter
86: load
87: discharging switch
88: power supply controller
91: vehicle body
93: motor
94: power generator
95: DC/AC inverter
96: engine
97: wheel
98: charging plug
d1, d2, d3: gap
HV, EV: vehicle

## Claims

1. A power supply device comprising:
a plurality of battery cells each including an electrode terminal;
a spacer interposed between adjacent battery cells of the plurality of battery cells in a battery stack in which the plurality of battery cells are stacked;
end plates that press end surfaces of the battery stack;
a plurality of fastening members each including a plate shape extending in a stacking direction of the plurality of battery cells, the fastening members being disposed on opposite side surfaces of the battery stack and fastening the end plates to each other;
an output terminal that connects the plurality of battery cells at least in series or in parallel and outputs electric power; and
a lower plate that includes metal and covers a lower surface of the battery stack,
wherein the output terminal is disposed near an upper surface of the battery stack, and
one or more wide regions expand to be intervals at which a capillary phenomenon does not occur in a path of a gap from the lower plate or the fastening members to the output terminal.

2. The power supply device according to Claim 1, further comprising a terminal cover of insulation that at least partially covers the output terminal,
wherein the output terminal is disposed on an upper surface of each of the end plates, and
the one or more wide regions are located between the terminal cover and the upper surface of each of the end plates.

3. The power supply device according to Claim 2, wherein the terminal cover includes sloped surfaces extending along the upper surface of each of the end plates to right and left with the output terminal as a center, the sloped surfaces each forming a downhill gradient toward an end part of each of the end plates on the upper surface of each of the end plates.

4. The power supply device according to Claim 3, wherein
the output terminal includes a second bolt and a third bolt that fix the output terminal to the end plates, and
the sloped surfaces respectively include a second recess and a third recess through which the second bolt and the third bolt are inserted, and the second recess and the third recess each include a cutout communicating with an end surface of the corresponding sloped surface.

5. The power supply device according to any one of Claims 2 to 4, wherein an upper surface of the terminal cover is sloped in a direction from a surface that presses the battery stack toward a back surface of each of the end plates.

6. The power supply device according to any one of Claims 2 to 5, wherein
the output terminal includes a bolt made of metal screwed to the upper surface of each of the end plates, and
each of the end plates includes a slope with a downhill gradient toward a tip of the bolt at an interface with the output terminal.

7. The power supply device according to any one of Claims 1 to 6, further comprising an end surface spacer of insulation between the battery stack and each of the end plates,
wherein the one or more wide regions are located between the end surface spacer and the output terminal.

8. The power supply device according to any one of Claims 1 to 7, further comprising an output bus bar that connects the electrode terminal of a battery cell disposed on an end surface of the battery stack among the plurality of battery cells and the output terminal,
wherein the output terminal is disposed on an upper surface of each of the end plates, and
the one or more wide regions are located between the output bus bar and the battery stack.

9. The power supply device according to any one of Claims 1 to 8, wherein
the spacer includes:
a flat plate that is brought into contact with main surfaces of the adjacent battery cells of the plurality of the battery cells; and
lateral guide that is disposed on each of both side surfaces of the flat plate and partially cover side surfaces of the adjacent battery cells of the plurality of battery cells in contact with the flat plate,
wherein a recess at which the corresponding side surface of the flat plate is recessed inward from the corresponding lateral guide is included as the one or more wide regions in a region where an upper part of the lateral guide is included in the side surface of the flat plate.

10. The power supply device according to any one of Claims 1 to 9, wherein
each of the plurality of fastening members includes a plurality of pressing pieces that are provided for respective battery cells and press upper surfaces of the adjacent battery cells of the plurality of battery cells,
the power supply device further includes a supporter that is disposed at an upper end of the spacer and supports the plurality of pressing pieces, and
the one or more wide regions are included between the supporter and the spacer.

11. The power supply device according to any one of Claims 1 to 10, wherein the wide region is a space of more than or equal to 1.8 mm.

12. A vehicle comprising the power supply device according to any one of Claims 1 to 11, the vehicle comprising:
the power supply device;
a motor for traveling to which the power supply device supplies electric power;
a vehicle body equipped with the power supply device and the motor; and
a wheel driven by the motor to cause the vehicle body to travel.

13. A power storage device comprising the power supply device according to any one of Claims 1 to 12, the power storage device comprising:
the power supply device; and
a power supply controller that controls charging and discharging of the power supply device,
wherein the power supply controller enables charging of the plurality of battery cells with electric power from outside, and controls charging to be performed on the plurality of battery cells.
